# EUROPÄISCHE PATENTANMELDUNG

(11) **EP 4 184 044 A1**
(43) Veröffentlichungstag der Anmeldung: **24.05.2023**
(21) Anmeldenummer: 21210039.0
(22) Anmeldetag: 23.11.2021
(51) Int. Cl.: F16K 15/04, F16K 17/28, F16K 1/44

(54) **VENTILVORRICHTUNG**

(71) Anmelder: Kendrion Kuhnke Automation GmbH, 23714 Malente (DE)
(72) Erfinder: KEMKOWSKI, Thomas, 23715 Braak (DE); MELZER, Frank, 23701 Eutin (DE); RÖHR, Johannes, 23714 Malente (DE); DESENS, Sven, 23858 Heidekamp (DE)
(74) Vertreter: Seemann & Partner Patentanwälte mbB

(57) **Zusammenfassung**

Die Erfindung betrifft u.a. eine Ventilvorrichtung (10) mit einem von einem Fluid durchströmbaren Fluidkörper (12), wobei der Fluidkörper (12) eine Fluidkammer (14) mit einer ersten endseitigen Öffnung (16) und einer zweiten endseitigen Öffnung (20) aufweist, wobei im Inneren des Fluidkörpers (12) ein erster bewegbarer Ventilkörper (26) der ersten Öffnung (16) der Fluidkammer (14) zugeordnet ist und ein zweiter bewegbarer Ventilkörper (30) der zweiten Öffnung (20) der Fluidkammer (14) zugeordnet ist, wobei zwischen dem ersten Ventilkörper (26) und dem zweiten Ventilkörper (30) ein Federkörper (28) angeordnet ist, wobei der erste Ventilkörper an der ersten Öffnung (16) zwischen einer ersten Position und einer zweiten Position bewegbar ist oder bewegt wird, wobei in der ersten Position des ersten Ventilkörpers (26) und bei einem Fluidvolumenstrom von der zweiten Öffnung (20) zur ersten Öffnung (16) der zweite Ventilkörper (30) in Richtung des ersten Ventilkörpers (26) bewegt ist oder wird, wobei der erste Ventilkörper und der zweite Ventilkörper in Kontakt mit dem Federkörper (28) bringbar sind oder gebracht sind, und in der ersten Position des ersten Ventilkörpers (26) und bei einem Fluidvolumenstrom von der ersten Öffnung (16) zur zweiten Öffnung (20) der zweite Ventilkörper (30) die zweite Öffnung (20) verschließt.

## Beschreibung

Die Erfindung betrifft eine Ventilvorrichtung mit einem von einem Fluid durchströmbaren Fluidkörper sowie eine Verwendung derselben. Außerdem betrifft die Erfindung eine Behandlungsvorrichtung für Zahnbehandlungen.

Es ist bekannt, dass bei Dental-Behandlungsstühlen Wasser-Luft-Versorgungseinheiten eingesetzt werden. Diese Einheiten weisen für die fluidischen Medien, wie z.B. Luft und Wasser, entsprechende Ventile auf.

Eine Aufgabe in der Erfindung besteht darin, eine kompaktbauende Ventilvorrichtung, z.B. für eine Wasser-Luft-Versorgungseinheit, insbesondere für Dental-Behandlungsstühle, bereitzustellen.

Gelöst wird diese Aufgabe durch eine Ventilvorrichtung mit einem von einem Fluid durchströmbaren Fluidkörper, wobei der Fluidkörper eine Fluidkammer mit einer ersten endseitigen Öffnung und einer zweiten endseitigen Öffnung aufweist, wobei im Inneren des Fluidkörpers ein erster bewegbarer Ventilkörper der ersten Öffnung der Fluidkammer zugeordnet ist und ein zweiter bewegbarer Ventilkörper der zweiten Öffnung der Fluidkammer zugeordnet ist, wobei zwischen dem ersten Ventilkörper und dem zweiten Ventilkörper ein Federkörper angeordnet ist, wobei der erste Ventilkörper an der ersten Öffnung zwischen einer ersten, insbesondere ausgefahrenen, Position und einer zweiten, insbesondere eingefahrenen, Position, insbesondere linear, bewegbar ist oder bewegt wird, wobei bei einem Fluidvolumenstrom von der zweiten Öffnung zur ersten Öffnung und in der ersten Position des ersten Ventilkörpers der zweite Ventilkörper in Richtung des ersten Ventilkörpers bewegt ist oder bewegt wird, wobei der erste Ventilkörper und der zweite Ventilkörper in Kontakt mit dem Federkörper bringbar sind oder gebracht sind, und bei einem Fluidvolumenstrom von der ersten Öffnung zur zweiten Öffnung und in der ersten Position des ersten Ventilkörpers der zweite Ventilkörper die zweite Öffnung verschließt.

Die Erfindung beruht auf dem Gedanken, eine Ventilvorrichtung bereitzustellen, bei der eine Rückflussverhinderungsvorrichtung und eine Druckstoßreduziervorrichtung in einem Gehäuse integriert sind. Hierbei ist es möglich, dass z.B. bei einer Dental-Behandlungsvorrichtung in einer Wasser-Luft-Versorgungseinheit bei längeren zeitlichen Unterbrechungen oder Pausen die Versorgung mit einem Fluid oder Medium, wie z.B. Luft oder Wasser, mittels der Ventilvorrichtung komplett abgeschaltet ist. Dabei ist die Ventilvorrichtung derart ausgebildet, dass im eingeschalteten Zustand, d.h. der erste bewegbare Ventilkörper in der ersten, d.h. ausgefahrenen Position, an der ersten Öffnung angeordnet ist, wodurch die Ventilvorrichtung als Druckstoßreduziervorrichtung wirksam ist. Hierbei ist der Volumenstrom des Fluids, beispielsweise Wasser, von der zweiten Öffnung zur ersten Öffnung durch die Fluidkammer gerichtet, wodurch der zweite Ventilkörper in der Fluidkammer im Zusammenwirken mit dem ihn kontaktierenden Federkörper eine Druckstoßreduziervorrichtung ausbildet.

Darüber hinaus ist zur Verhinderung eines Rückflusses eines Fluids oder Mediums, beispielsweise Luft, von der ersten Öffnung in Richtung der zweiten Öffnung im Falle eines Druckabfalls an der zweiten Öffnung vorgesehen, dass durch das Verschließen der zweiten Öffnung mittels des zweiten Ventilkörpers die erfindungsgemäße Ventilvorrichtung als Rückflussverhinderungsvorrichtung ausgebildet ist, um beispielsweise eine Verunreinigung des an der zweiten Öffnung der Fluidkammer bereitgestellten Fluid oder Mediums, wie z.B. Wasser, zu verhindern. Dabei wirkt z.B. auf den zweiten Ventilkörper ein Druck durch das über die erste Öffnung eingebrachte Fluid, wodurch der zweite Ventilkörper in Richtung der zweiten Öffnung der Fluidkammer bewegt wird und die zweite Öffnung verschließt.

Insgesamt wird durch die Ventilvorrichtung ein 2/2-Wegeventil mit einer integrierten Rückflussverhinderungsvorrichtung und einer Druckstoßreduziervorrichtung bereitgestellt.

In einer weiteren Ausgestaltung ist dabei vorgesehen, dass die erste Öffnung in der ersten Position des ersten Ventilkörpers geöffnet ist und die erste Öffnung in der zweiten Position des ersten Ventilkörpers geöffnet ist. Dadurch ist permanent die erste Öffnung der Fluidkammer unabhängig von der Position des ersten Ventilkörpers innerhalb der Fluidkammer sowohl im Betrieb der Ventilvorrichtung als auch bei einer Pause permanent geöffnet.

Außerdem zeichnet sich eine Weiterbildung der Ventilvorrichtung dadurch aus, dass in der ersten Position des ersten Ventilkörpers und bei Kontakt des zweiten Ventilkörpers mit dem Federkörper bei einer Erhöhung des von der zweiten Öffnung zur ersten Öffnung gerichteten Fluidvolumenstroms, insbesondere bei einem Druckstoß des von der zweiten Öffnung zur ersten Öffnung strömenden Fluids, der zweite Ventilkörper in Richtung der ersten Öffnung bewegt wird, so dass die Durchflussmenge des von der zweiten Öffnung zur ersten Öffnung des fließenden Fluids reduziert wird oder der Durchfluss des Fluids von der zweiten Öffnung zur ersten Öffnung verhindert wird. In Abhängigkeit des auf den zweiten Ventilkörper wirkenden Drucks durch den von der zweiten Öffnung zur ersten Öffnung gerichteten Fluidvolumenstrom des Fluids wird hierdurch die Durchflussmenge des fließenden Fluids durch die erste Öffnung der Fluidkammer entsprechend geregelt, wobei aufgrund des wirksamen Drucks auf den zweiten Ventilkörper dieser gegen den Federkörper und den ersten Ventilkörper (in der ersten Position) bewegt bzw. gedrückt wird. Dabei ist vorgesehen, dass bei einem übergroßen Druckstoß des Fluids der Durchfluss des Fluids mittels des zweiten Ventilkörpers in einer Ausgestaltung verhindert wird. Insgesamt wird dadurch eine Druckstoßreduziervorrichtung ausgebildet.

Vorzugsweise ist gemäß einem weiteren Aspekt der Federkörper am ersten Ventilkörper oder am zweiten Ventilkörper angeordnet. Im Falle, dass der Federkörper am ersten Ventilkörper angeordnet ist, ist es möglich, den zweiten Ventilkörper mit dem dazwischen angeordneten Federkörper in Kontakt zu bringen. In der alternativen Ausgestaltung, dass der Federkörper am zweiten Ventilkörper angeordnet ist, wird bei Bewegung des zweiten Ventilkörpers innerhalb der Fluidkammer in Richtung des ersten Ventilkörpers der Federkörper mit dem ersten Ventilkörper in Kontakt gebracht.

Darüber hinaus ist es bei der Ventilvorrichtung vorteilhafterweise vorgesehen, dass der erste Ventilkörper eine vom Fluid anströmbare Querschnittsfläche aufweist und der zweite Ventilkörper eine anströmbare Querschnittsfläche aufweist, wobei die Querschnittsfläche des ersten Ventilkörpers kleiner als die Querschnittsfläche des zweiten Ventilkörpers ist.

Außerdem zeichnet sich eine vorteilhafte Ausführungsform der Ventilvorrichtung dadurch aus, dass in der zweiten Position des ersten Ventilkörpers und bei Beaufschlagung des zweiten Ventilkörpers mit einem Fluid durch die zweite Öffnung der zweite Ventilkörper einen Ventilsitz im Inneren der Fluidkammer zwischen der ersten Öffnung und der zweiten Öffnung verschließt. Das Verschließen des Ventilsitzes der Fluidkammer für den zweiten Ventilkörper erfolgt beispielsweise in dem Fall, wenn beispielsweise mittels eines Druckstoßes des Fluids der zweite Ventilkörper gegen den Ventilsitz im Innern der Fluidkammer gedrückt wird.

Dazu ist in einer vorteilhaften Weiterbildung vorgesehen, dass der Ventilsitz für den zweiten Ventilkörper zwischen einem ersten Abschnitt der Fluidkammer und einem zweiten Abschnitt der Fluidkammer ausgebildet ist, wobei insbesondere der erste Abschnitt der Fluidkammer und der zweite Abschnitt der Fluidkammer jeweils eine Strömungsquerschnittsfläche aufweisen und die Strömungsquerschnittsfläche des ersten Abschnitts der Fluidkammer kleiner als die Strömungsquerschnittsfläche des zweiten Abschnitts der Fluidkammer ist.

Hierbei ist der erste Abschnitt der Fluidkammer für den ersten Ventilkörper vorgesehen, wobei innerhalb des ersten Abschnitts der Fluidkammer der erste Ventilkörper bewegbar ist oder bewegt wird. Der zweite Abschnitt der Fluidkammer ist für den zweiten Ventilkörper vorgesehen, wobei innerhalb des zweiten Abschnitts der Fluidkammer der zweite Ventilkörper bewegt wird oder bewegbar ist.

Des Weiteren ist in einer Ausführungsform vorteilhafterweise vorgesehen, dass der erste Ventilkörper an der ersten Öffnung aus der zweiten Position in die erste Position mittels eines, vorzugsweise mechanisch, betätigbaren, insbesondere drehbaren, Betätigungsglieds bewegbar ist oder bewegt wird.

Vorzugsweise weist der erste Ventilkörper einen Stiftkörper mit einem Kopfteil auf, wobei der Durchmesser des Stiftkörpers kleiner als der Durchmesser des Kopfteils ist. Insbesondere ist das Kopfteil des ersten Ventilkörpers innerhalb des ersten Abschnitts der Fluidkammer angeordnet. Ferner ist für den, vorzugsweise linear bewegbaren, Stiftkörper, eine Führung in einem Gehäuse des Fluidkörpers vorgesehen, so dass der Stiftkörper in Bezug auf das, vorzugsweise ortsfeste, Gehäuse des Fluidkörpers relativ bewegbar ist.

Gemäß einem vorteilhaften Aspekt ist weiterhin vorgesehen, dass der zweite Ventilkörper als Kugel oder als scheibenförmiger Körper ausgebildet ist. Insbesondere ist der scheibenförmige Körper als Flachdichtung oder dergleichen ausgebildet.

Ferner zeichnet sich eine Ausgestaltung der Ventilvorrichtung dadurch aus, dass der Federkörper als Druckfeder ausgebildet ist.

Bei der Ventilvorrichtung ist gemäß einer weiteren Ausgestaltung vorgesehen, dass die erste Öffnung der Fluidkammer und die zweite Öffnung der Fluidkammer einander gegenüberliegend angeordnet sind.

Günstig ist es außerdem bei einer Weiterbildung der Ventilvorrichtung, wenn die erste Öffnung als eine, insbesondere nicht-verschließbare, Bypass-Leitung ausgebildet ist.

Ferner wird die Aufgabe gelöst durch eine Verwendung einer voranstehend beschriebenen Ventilvorrichtung in einer Behandlungsvorrichtung für Zahnbehandlungen, insbesondere in einer Wasser-Luft-Versorgungseinheit der Behandlungsvorrichtung. Zur Vermeidung von Wiederholungen wird auf die obigen Ausführungen ausdrücklich verwiesen.

Überdies wird die Aufgabe gelöst durch eine Behandlungsvorrichtung für Zahnbehandlungen mit einer erfindungsgemäßen, oben beschriebenen Ventilvorrichtung, wobei insbesondere die Ventilvorrichtung in einer Wasser-Luft-Versorgungseinheit vorgesehen ist. Im Rahmen der Erfindung ist dabei vorgesehen, dass an der zweiten Öffnung eine Wasserleitung angeschlossen ist, so dass Wasser als Fluid über die zweite Öffnung der Fluidkammer zur ersten Öffnung der Fluidkammer fließen kann. Hierbei wirkt der zweite Ventilkörper insbesondere als eine Art Druckstoßreduzierer.

An der ersten Öffnung ist zudem eine Fluidleitung angeschlossen, wobei im Falle eines Druckabfalls an der zweiten Öffnung der zweite Ventilkörper als Rückflussverhinderer wirkt, um eine Verschmutzung des Wassers (an der zweiten Öffnung) vor der Behandlungsvorrichtung zu verhindern. Zur Vermeidung von Wiederholungen wird auf die obigen Ausführungen ausdrücklich verwiesen. Im Rahmen der Erfindung kann hierbei vorgesehen sein, dass bei der Behandlungsvorrichtung der Druck des Fluids (Wasser) an der zweiten Öffnung abfällt und auf der Seite der ersten Öffnung der geodätische Druck wirkt. Dabei wirkt dieser Druck auf den als Dichtelement ausgebildeten zweiten Ventilkörper und verschließt dabei die zweite Öffnung der Fluidkammer.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch eine perspektivische Querschnittansicht einer erfindungsgemäßen Ventilanordnung;
- Fig. 2: schematisch eine weitere Querschnittsdarstellung der Ventilanordnung;
- Fig. 3: schematisch eine weitere Querschnittsansicht der Ventilanordnung und
- Fig. 4: schematisch eine weitere Querschnittsansicht der Ventilanordnung.

In den Zeichnungen sind jeweils gleiche oder gleichartige Elemente und/oder Teile mit denselben Bezugsziffern versehen, so dass von einer erneuten Vorstellung jeweils abgesehen wird.

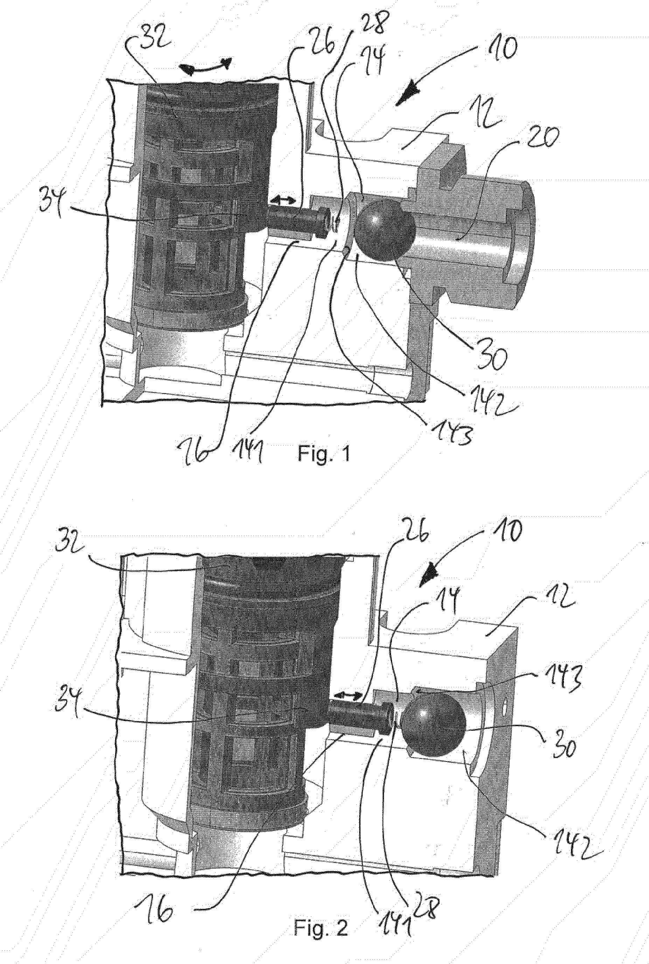

In Fig. 1 ist im Querschnitt eine Ventilanordnung 10 gezeigt. Die Ventilanordnung 10 ist beispielsweise Bestandteil einer Wasser-Luft-Versorgungseinheit für einen Dental-Behandlungsstuhl.

Die Ventilvorrichtung 10 weist ein Gehäuse 12 auf, das beispielsweise als Fluidkörper bezeichnet wird. Im Gehäuse 12 ist eine von einem Fluid durchströmbare Fluidkammer 14 ausgebildet. Die Fluidkammer 14 weist auf einer Seite in einer Durchströmungsrichtung als erste Öffnung einen Fluidkanal 16 auf. Ferner ist die Fluidkammer 14 auf dem dem Fluidkanal 16 (als erste Öffnung) gegenüberliegenden Ende mit einem Fluidkanal 20 ausgebildet. Der Fluidkanal 20 ist hierbei als zweite Öffnung für die Fluidkammer 14 ausgebildet.

Oberhalb des Fluidkanals 16 ist ein linear beweglicher Ventilkörper 26 angeordnet. Der Ventilkörper 26 weist einen länglichen Stiftkörper mit einem verbreiterten Kopfteil auf, an dessen in der Fluidkammer 14 angeordneten Ende eine Druckfeder 28 angeordnet ist.

Durch den Fluidkanal 20 ist die Fluidkammer 14 mit einer zweiten Öffnung begrenzt, sodass ein Fluid von dem Fluidkanal 16 durch die Fluidkammer 14 in den Fluidkanal 20 strömen kann. Bei einer Strömungsumkehr des Fluids strömt das oder ein Fluid durch den Fluidkanal 20 und die Fluidkammer 14 zum Fluidkanal 16.

Um den ersten Ventilkörper 26 in seiner Führung linear zu bewegen, ist außerhalb der Fluidkammer 14 ein Betätigungsglied 32 angeordnet, das eine Bewegungskulisse 34 für den Ventilkörper 26 aufweist. Das Betätigungsglied 32 ist drehbar gelagert, wobei bei einer Drehung des Betätigungsglieds 32 aufgrund eines Kontaktes zwischen der Bewegungskulisse 34 und dem Ventilkörper 26 der Ventilkörper 26 in die Fluidkammer 14 hineinbewegt wird bzw. in Richtung des zweiten Fluidkanals 20 bewegt wird.

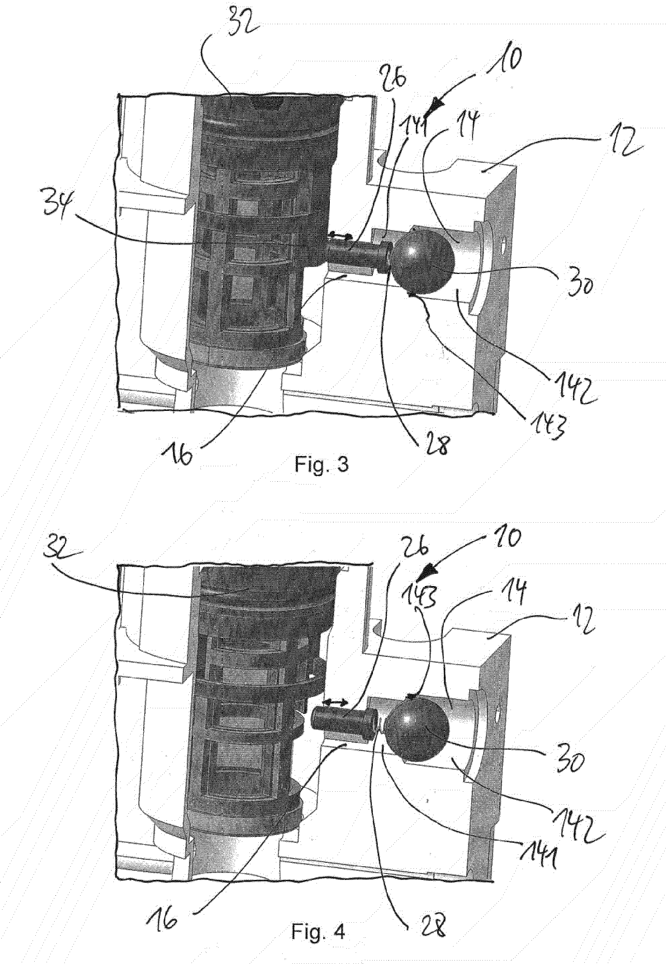

Bei den Darstellungen der Ventilvorrichtung 10 in den Fig. 1 bis Fig. 3 ist der (erste) Ventilkörper 26 in einer ersten, d.h. ausgefahrenen, Position angeordnet. In Fig. 4 ist bei der Ventilvorrichtung 10 eine andere Position des Betätigungsglieds 32 nach einer Drehung des Betätigungsglieds 32 dargestellt, wobei in diesem Fall der Ventilkörper 26 in einer zweiten, d.h. eingefahrenen, Position angeordnet ist.

In der Fluidkammer 14 ist zwischen dem (ersten) Ventilkörper 26 mit der daran angeordneten Druckfeder 28 und dem Fluidkanal 20 ein kugelartiger Ventilkörper 30 als zweiter Ventilkörper in der Fluidkammer 14 angeordnet. Je nach Strömung eines Fluids vom Fluidkanal 16 zum Fluidkanal 20 oder vom Fluidkanal 20 zum Fluidkanal 16 wird der (zweite) Ventilkörper 30 innerhalb der Fluidkammer bewegt.

Bei der in Fig. 1 gezeigten Darstellung ist der Ventilkörper 30 am Fluidkanal 20 angeordnet, wobei über den Fluidkanal 16 hierbei ein Fluid, wie z.B. Luft, in die Fluidkammer 14 eingebracht wird, so dass der Ventilkörper 30 gegen die Öffnung des Fluidkanals 20 gedrückt wird und dadurch den Fluidkanal 20 abdichtet. In diesem Fall ist z.B. ein Druckabfall des in dem Fluidkanal 20 vorgesehenen Fluids ausgebildet.

Bei den in den Fig. 1 bis 3 gezeigten Darstellungen befindet sich der (erste) Ventilkörper 26 in der ausgefahrenen Position, während in Fig. 4 der Ventilkörper 26 in der eingefahrenen Position gezeigt ist.

Fig. 2 bis 4 zeigen Darstellungen der Ventilvorrichtung 10, wobei über den (nicht dargestellten) Fluidkanal 20 ein Fluid, wie z.B. Wasser, in die Fluidkammer 14 eingebracht wird. Aufgrund der Strömungsrichtung des Fluids von dem Fluidkanal 20 in Richtung des Fluidkanals 16 wird der (zweite) Ventilkörper 30 in Richtung des (ersten) Ventilkörpers 26 bzw. der daran angeordneten Druckfeder 28 bewegt.

Die Fluidkammer 14 weist im Innern zwei Kammerabschnitte 141, 142 auf. Im Kammerabschnitt 141 ist der (erste) Ventilkörper 16 aufgenommen und im Kammerabschnitt 142 ist der (zweite) Ventilköper 30 aufgenommen. Der Kammerabschnitt 141 weist einen Querschnitt auf, der kleiner als der Querschnitt des zweiten Fluidkammerabschnitt 142 ist.

Im Übergang zwischen dem Fluidkammerabschnitt 142 und dem Fluidkammerabschnitt 141 ist ein Ventilsitz 143 für den (zweiten) Ventilkörper 30 ausgebildet. Wird der Druck des von dem Fluidkanal 20 zum Fluidkanal 16 fließenden Fluids erhöht, d.h. dass der Volumenstrom des Fluids in der Fluidkammer 14 erhöht wird, wird der Ventilkörper 30 in Richtung des Ventilsitzes 143 bewegt, so dass die Durchflussmenge des Fluids durch den Fluidkanal 16 im Wesentlichen konstant gehalten oder reduziert wird.

In Fig. 3 ist die Situation dargestellt, in der beispielsweise bei einem Druckstoß des Fluids, das von dem Fluidkanal 20 in Richtung des Fluidkanals 16 strömt, der Ventilkörper 30 gegen den Ventilsitz 143 gedrückt wird, wodurch verhindert wird, dass durch einen Druckstoß Einheiten, die mit dem Fluidkanal 16 verbunden sind, beschädigt werden.

In Fig. 4 ist die Situation dargestellt, bei der im abgeschalteten Zustand der Ventilvorrichtung 10 z.B. nach einer Drehung des Betätigungsglieds 32 der Ventilkörper 26 in der eingefahrenen (zweiten) Position angeordnet ist und ein Fluid, wie z.B. Wasser, über den offenen Fluidkanal 20 in die Fluidkammer 14 eingebracht wird. Dabei wird der (zweite) Ventilkörper 30 gegen den Ventilsitz 143 in der Fluidkammer 14 gedrückt, so dass kein Fluid in den Fluidkanal 16 strömt. Dies folgt beispielsweise dann, wenn sich die Ventilvorrichtung 10 im abgeschalteten Zustand befindet. Hierbei wirkt die Ventilvorrichtung 10 als Rückflussverhinderungsvorrichtung, so dass kein Fluid aus der Fluidkammer 14 in den Fluidkanal 16 strömt.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: Ventilvorrichtung
- 12: Gehäuse
- 14: Fluidkammer
- 16: Fluidkanal
- 20: Fluidkanal
- 26: Ventilkörper
- 28: Druckfeder
- 30: Ventilkörper
- 32: Betätigungsglied
- 34: Bewegungskulisse
- 141: Fluidkammerabschnitt
- 142: Fluidkammerabschnitt
- 143: Ventilsitz

## Patentansprüche

1. Ventilvorrichtung (10) mit einem von einem Fluid durchströmbaren Fluidkörper (12), wobei der Fluidkörper (12) eine Fluidkammer (14) mit einer ersten endseitigen Öffnung (16) und einer zweiten endseitigen Öffnung (20) aufweist, wobei im Inneren des Fluidkörpers (12) ein erster bewegbarer Ventilkörper (26) der ersten Öffnung (16) der Fluidkammer (14) zugeordnet ist und ein zweiter bewegbarer Ventilkörper (30) der zweiten Öffnung (20) der Fluidkammer (14) zugeordnet ist, wobei zwischen dem ersten Ventilkörper (26) und dem zweiten Ventilkörper (30) ein Federkörper (28) angeordnet ist, wobei der erste Ventilkörper an der ersten Öffnung (16) zwischen einer ersten, insbesondere ausgefahrenen, Position und einer zweiten, insbesondere eingefahrenen, Position, insbesondere linear, bewegbar ist oder bewegt wird, wobei in der ersten Position des ersten Ventilkörpers (26) und bei einem Fluidvolumenstrom von der zweiten Öffnung (20) zur ersten Öffnung (16) der zweite Ventilkörper (30) in Richtung des ersten Ventilkörpers (26) bewegt ist oder wird, wobei der erste Ventilkörper und der zweite Ventilkörper in Kontakt mit dem Federkörper (28) bringbar sind oder gebracht sind, und in der ersten Position des ersten Ventilkörpers (26) und bei einem Fluidvolumenstrom von der ersten Öffnung (16) zur zweiten Öffnung (20) der zweite Ventilkörper (30) die zweite Öffnung (20) verschließt.

2. Ventilvorrichtung (10) nach Anspruch 1, **dadurch gekennzeichnet, dass** die erste Öffnung (16) in der ersten Position des ersten Ventilkörpers (26) der Fluidkammer (14) geöffnet ist und die erste Öffnung (16) in der zweiten Position des ersten Ventilkörpers (26) geöffnet ist.

3. Ventilvorrichtung (10) nach Anspruch 1 oder 2, **dadurch gekennzeichnet, dass** in der ersten Position des ersten Ventilkörpers (26) und bei Kontakt des zweiten Ventilkörpers (30) mit dem Federkörper (28) bei einer Erhöhung des von der zweiten Öffnung (20) zur ersten Öffnung (16) gerichteten Fluidvolumenstroms, insbesondere bei einem Druckstoß des von der zweiten Öffnung (20) zur ersten Öffnung (16) strömenden Fluids, der zweite Ventilkörper (30) in Richtung der ersten Öffnung (16) bewegt wird, so dass die Durchflussmenge des von der zweiten Öffnung (20) zur ersten Öffnung (16) des fließenden Fluids reduziert wird oder der Durchfluss des Fluids von der zweiten Öffnung (20) zur ersten Öffnung (16) verhindert wird.

4. Ventilvorrichtung (10) nach einem der Ansprüche 1 bis 3, **dadurch gekennzeichnet, dass** der Federkörper (28) am ersten Ventilkörper (26) angeordnet ist oder dass der Federkörper (28) am zweiten Ventilkörper (30) angeordnet ist.

5. Ventilvorrichtung (10) nach einem der Ansprüche 1 bis 4, **dadurch gekennzeichnet, dass** der erste Ventilkörper (26) eine vom Fluid anströmbare Querschnittsfläche aufweist und der zweite Ventilkörper (30) eine anströmbare Querschnittsfläche aufweist, wobei die Querschnittsfläche des ersten Ventilkörpers (26) kleiner als die Querschnittsfläche des zweiten Ventilkörpers (30) ist.

6. Ventilvorrichtung (10) nach einem der Ansprüche 1 bis 5, **dadurch gekennzeichnet, dass** in der zweiten Position des ersten Ventilkörpers (26) und bei Beaufschlagung des zweiten Ventilkörpers (30) mit einem Fluid durch die zweite Öffnung (20) der zweite Ventilkörper (30) einen Ventilsitz (143) im Innern der Fluidkammer (14) zwischen der ersten Öffnung (16) und der zweiten Öffnung (20) verschließt.

7. Ventilvorrichtung (10) nach Anspruch 6, **dadurch gekennzeichnet, dass** der Ventilsitz für den zweiten Ventilkörper (30) zwischen einem ersten Abschnitt (141) der Fluidkammer (14) und einem zweiten Abschnitt (142) der Fluidkammer (14) ausgebildet ist, wobei insbesondere der erste Abschnitt (141) der Fluidkammer (14) und der zweite Abschnitt (142) der Fluidkammer (14) jeweils eine Strömungsquerschnittsfläche aufweisen und die Strömungsquerschnittsfläche des ersten Abschnitts (141) der Fluidkammer (14) kleiner als die Strömungsquerschnittsfläche des zweiten Abschnitts (142) der Fluidkammer (14) ist.

8. Ventilvorrichtung (10) nach einem der Ansprüche 1 bis 7, **dadurch gekennzeichnet, dass** der erste Ventilkörper (26) an der ersten Öffnung (16) aus der zweiten Position in die erste Position mittels eines, vorzugsweise mechanisch, betätigbaren, insbesondere drehbaren, Betätigungsglieds (32) bewegbar ist oder bewegt wird.

9. Ventilvorrichtung (10) nach einem der Ansprüche 1 bis 8, **dadurch gekennzeichnet, dass** der erste Ventilkörper (26) einen Stiftkörper mit einem Kopfteil aufweist, wobei der Durchmesser des Stiftkörpers kleiner als der Durchmesser des Kopfteils ist.

10. Ventilvorrichtung (10) nach einem der Ansprüche 1 bis 9, **dadurch gekennzeichnet, dass** der zweite Ventilkörper (30) als Kugel oder als scheibenförmiger Körper ausgebildet ist.

11. Ventilvorrichtung (10) nach einem der Ansprüche 1 bis 10, **dadurch gekennzeichnet, dass** der Federkörper (28) als Druckfeder (28) ausgebildet ist.

12. Ventilvorrichtung (10) nach einem der Ansprüche 1 bis 11, **dadurch gekennzeichnet, dass** die erste Öffnung (16) der Fluidkammer (14) und die zweite Öffnung (20) der Fluidkammer (14) einander gegenüberliegend angeordnet sind.

13. Ventilvorrichtung (10) nach einem der Ansprüche 1 bis 12, **dadurch gekennzeichnet, dass** die erste Öffnung (16) als eine, insbesondere nicht-verschließbare, Bypass-Leitung ausgebildet ist.

14. Verwendung einer Ventilvorrichtung (10) nach einem der Ansprüche 1 bis 13 in einer Behandlungsvorrichtung für Zahnbehandlungen, insbesondere in einer Wasser-Luft-Versorgungseinheit der Behandlungsvorrichtung.

15. Behandlungsvorrichtung für Zahnbehandlungen mit einer Ventilvorrichtung (10) nach einem der Ansprüche 1 bis 13, wobei insbesondere die Ventilvorrichtung (10) in einer Wasser-Luft-Versorgungseinheit vorgesehen ist.
